# EUROPEAN PATENT SPECIFICATION

(11) **EP 2 378 311 B1**
(45) Date of publication and mention of the grant of the patent: **14.03.2012**
(21) Application number: 10159956.1
(22) Date of filing: 14.04.2010
(51) Int. Cl.: G01S 19/21, H04B 1/38

(54) **Telecommunication and location determining method and system**
Verfahren und System zur Ortsbestimmung und Telekommunikation
Système et procédé de localisation et de télécommunication

(43) Date of publication of application: 19.10.2011
(73) Proprietor: ML-C MobileLocation-Company GmbH, 81539 München (DE)
(72) Inventor: Malek, Moni, 81677, München (DE)
(74) Representative: Dendorfer, Claus

(56) References cited:
- US-A1- 2003 045 333
- US-A1- 2009 239 548
- US-B1- 6 529 493
- US-B1- 6 831 911

## Description

### FIELD OF THE INVENTION

The present invention relates to the field of telecommunication and tracking systems. More precisely, it relates to communication over a mobile telecommunication network and location determination via a satellite navigation system.

### BACKGROUND OF THE INVENTION

Mobile telecommunication networks, especially Global System for Mobile Communication (GSM) and Universal Mobile Telecommunications System (UMTS) networks, have become ubiquitous. The use of satellite navigation systems like the Global Positioning System (GPS) for navigation purposes is broadly established in the markets.

Mobile devices are known that comprise both a telecommunication module and a location determination module. Such devices may be smart phones, in which the telecommunication feature and the location determination feature are aggregated, or tracking devices, in which the telecommunication feature is used to transmit the determined location of the tracking device to a location server.

Integrating both a telecommunication RF (radio frequency) signal transceiver and a navigation RF signal receiver in one device may cause interference effects between the two signals. Such interference may lead to degraded performance, in particular with respect to the navigation RF signal, as a navigation RF signal is significantly weaker than a telecommunication RF signal. Such interference effects may result in slower and less reliable determination of the location, while power consumption may be increased due to multiple retries.

US 2003/0045333 A1 discloses a compound information terminal that comprises a GPS terminal unit and a 3GPP-compliant mobile telephone unit. When the GPS terminal unit is activated, the terminal control unit switches the operation of the 3GPP-compliant mobile telephone unit to the compressed mode so that the GPS terminal unit can be brought into action while the 3GPP-compliant mobile telephone unit suspends its transmission operation.

US 6,831,911 B1 discloses a system and method for receiving and processing GPS and wireless phone signals. The system combines a GPS receiver and a wireless phone on a single integrated circuit. When a user desires to place or receive a wireless phone call, the GPS receiver suspends reception of the GPS signal to enable receipt or transmission of the wireless phone signal.

US 2009/0239548 A1 discloses an apparatus and method for deriving position information. The method comprises receiving a GPS signal that will have "gaps" during the periods when a radio is receiving GSM data. In a first mode of operation, the GPS data is nevertheless acquired even during these periods in order to obtain a position fix in minimum time at the expense of accuracy. In a second mode of operation, the de-spreading of the GPS signal is stopped when the handset is receiving GSM data. The second mode results in full accuracy, but requires a longer time to obtain a fix.

US 6,529,493 B1 discloses a mobile station that is adapted for transmitting and receiving telecommunication signals by radio, and for receiving positioning signals. A processor makes use of received positioning signals during moments in which the telecommunication signals are neither received nor transmitted.

### OBJECTS AND SUMMARY OF THE INVENTION

It is an object of the present invention to improve the process of determining a location in spite of possible interference effects. In particular, the improvement can concern the speed and/or reliability and/or power consumption of the location determining process.

The present invention is defined by the independent claims. The dependent claims concern optional features of some embodiments of the invention.

The present invention is based on the idea that mobile telecommunication networks have temporal gaps in their telecommunication RF signal in which the mobile device is not transmitting and/or not receiving. During these temporal gaps, the navigation RF signal is not degraded, and thus the location can be determined without interference caused by the telecommunication RF signal transceiver.

The invention has the considerable advantage of speeding up and/or improving the reliability of the determination of the location. This is especially advantageous, e.g., for emergency tracking devices, in which the current location is transmitted to a control room upon detection of an emergency event. Smart phone users with an active voice call or an active data session and concurrent use of the navigation feature of the phone will experience a more reliable synchronization with the satellite navigation system. Additionally, power is saved as the location determination takes only place in time intervals with an undistorted navigation RF signal.

Major interference may occur during the time where a mobile device transmits telecommunication RF signals, whereas minor signal interference may occur while the telecommunication receiver is active. Depending on the quality of the received navigation RF signal, some embodiments use the temporal gaps of the transmitted telecommunication RF signal only, whereas other embodiments use the overlap of temporal gaps of the transmitted telecommunication RF signal and the temporal gaps between the periods of activity of the telecommunication receiver. In other embodiments, the received navigation RF signal is analyzed and depending on the signal quality either the temporal gaps of the transmitted telecommunication RF signal are used, or the overlap of temporal gaps of the transmitted telecommunication RF signal and the temporal gaps of the received telecommunication RF signal is used to control the activity of the navigation RF signal receiver.

According to some embodiments of this invention, an interleaved telecommunication and location determining controller communicates with a first baseband controller for telecommunication purposes and a second baseband controller for location determining purposes. In such embodiments, the interleaved telecommunication and location determining controller ensures that the second baseband controller is only active if the first baseband controller does not transmit. In other embodiments, the interleaved telecommunication and location determining controller ensures that the second baseband controller is only active if the first baseband controller does neither transmit nor receive.

Some embodiments of the invention use passive processes to detect temporal gaps and to estimate the next temporal gap. In some embodiments, only the bursts of the transmitted telecommunication RF signal are taken into account, thus allowing navigation RF signal reception at the same time as telecommunication RF signal reception. In other embodiments, navigation RF signals are only processed if both the telecommunication transmitter and the telecommunication receiver are inactive.

Some embodiments of the invention cover active processes to increase the duration of temporal gaps or the number thereof by scheduling and reducing the number of transmitted telecommunication RF signal bursts and/or by scheduling the activity of the telecommunication receiver.

In further embodiments, the telecommunication transmitter and/or the telecommunication receiver is/are temporarily disabled to obtain further temporal gaps, during which the navigation RF signal can be processed without distortion. This is useful, if there is a demand for an immediate determination of the location while temporarily lowering the quality or availability of the telecommunication functionality.

The invention is generally applicable to all kinds of mobile telecommunication networks, either mobile phone cellular networks or satellite phone networks. The mobile phone cellular networks comprise Second Generation (2G) networks like the Global System for Mobile Communications (GSM), including its supplements General Packet Radio Service (GPRS) and Enhanced Data rates for GSM Evolution (EDGE), or Interim Standard 95 (IS-95, also known under its brand name cdmaOne), furthermore Third Generation (3G) networks like the Universal Mobile Telecommunications System (UMTS), including its supplements High Speed Downlink Packet Access (HSDPA) and High-Speed Uplink Packet Access (HSUPA), or CDMA2000. The satellite phone networks comprise Globalstar, Inmarsat, Iridium, MSAT, SkyTerra, Terrestar, and Thuraya.

The invention can be applied to all kinds of satellite navigation systems, like the Global Positioning System (GPS), the Globalnaya Navigatsionnaya Sputnikovaya Sistema (GLONASS), the Galileo positioning system (Galileo), or the Compass navigation system (Compass).

According to an embodiment of the invention, the method is implemented in an integrated circuit. In various embodiments, this circuit may be solely the interleaved telecommunication and location determining controller, or may be integrated together with the baseband controllers. In further embodiments, the integrated circuit may comprise all controllers and RF signal processors, thus providing a single chip solution for both telecommunication and location determining functionality.

The invention also comprises a machine-readable medium having suitable program instructions to realize the described method, for example, on a general-purpose computer or in a programmable integrated circuit. The machine-readable medium may be any kind of physical or non-physical data carrier like, for example, a computer disk or a CD-ROM or a semiconductor memory or a signal transmitted over a computer network.

### BRIEF DESCRIPTION OF THE DRAWINGS

Further features, objects and advantages of the invention will become apparent from the following detailed description, in connection with the annexed schematic drawings, in which:
Fig. 1 shows a block diagram of a conventional mobile device comprising a telecommunication section and a location determining section,
Fig. 2 shows components of a telecommunication RF signal processor,
Fig. 3 shows a component of a navigation RF signal processor,
Fig. 4 shows the location determining section which extracts navigation chips from the navigation RF signal,
Fig. 5 shows a block diagram of a mobile device utilizing an interleaved telecommunication and location determining controller according to an embodiment of the invention,
Fig. 6 shows various possibilities of combining certain control blocks in one integrated circuit,
Fig. 7 shows the activity of a telecommunication receiver, a telecommunication transmitter, and a navigation receiver, furthermore the navigation chips decoded from the navigation RF signal, in a conventional mobile device as shown in Fig. 1,
Fig. 8 to 11 show the activity of a telecommunication receiver, a telecommunication transmitter, and a navigation receiver, furthermore the navigation chips decoded from the navigation RF signal, in mobile devices according to various embodiments of this invention as shown in Fig. 5, and
Fig. 12 shows the activity of a telecommunication receiver and a telecommunication transmitter in relation to the time slots within a TDMA time frame and their multiframes.

### DETAILED DESCRIPTION OF EMBODIMENTS OF THE INVENTION

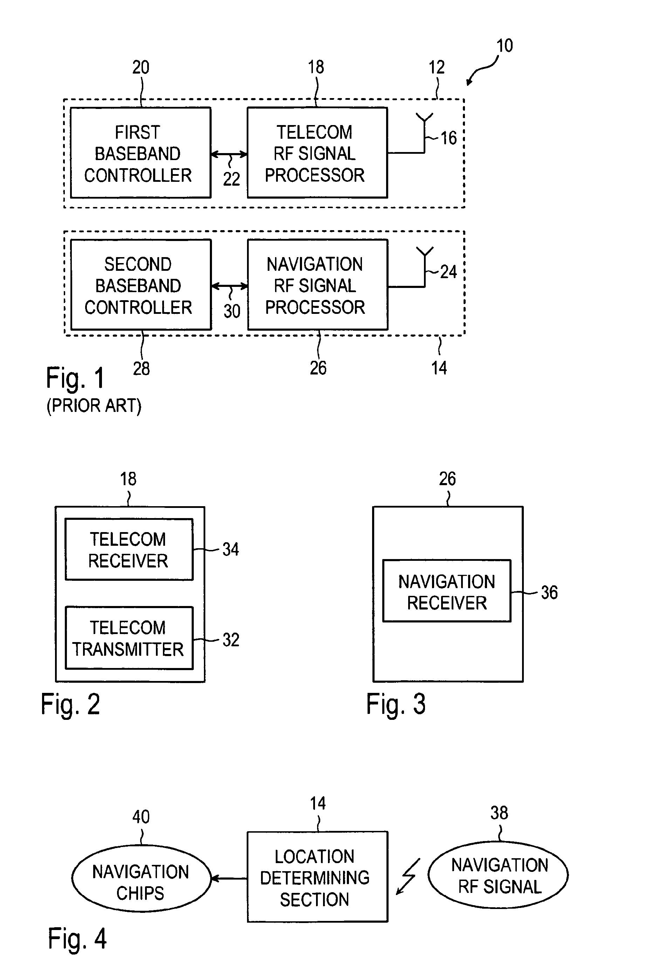

Fig. 1 shows a mobile device 10, comprising a telecommunication section 12 and a location determining section 14. The telecommunication section 12 comprises an antenna system 16, a telecommunication RF signal processor 18, and a first baseband controller 20. The telecommunication RF signal processor 18 is controlled by the first baseband controller 20 via an interface 22. The location determining section 14 comprises an antenna system 24, a navigation RF signal processor 26, and a second baseband controller 28. The navigation RF signal processor 26 is controlled by the second baseband controller 28 via an interface 30.

Fig. 2 shows the telecommunication RF signal processor 18 comprising a telecommunication transmitter 32 and a telecommunication receiver 34.

Fig. 3 shows the navigation RF signal processor 26 comprising a navigation receiver 36.

During operation of the telecommunication section 12, telecommunication RF signals are handled by the antenna system 16. The telecommunication RF signal processor 18 converts the received telecommunication RF signal to its baseband frequency and hands it over to the first baseband controller 20. Information is decoded from the received signals in the baseband controller 20. In case of transmitting a telecommunication RF signal, the first baseband controller 20 converts the information to be sent into a baseband signal according to the underlying telecommunication standard, whereas the baseband signal is converted into a telecommunication RF signal in the telecommunication RF signal processor 18.

Fig. 4 shows the operation of the location determining section 14. Navigation RF signals 38 are handled by the antenna system 24. The navigation RF signal processor 26 converts the received navigation RF signal 38 to its baseband frequency and hands it over to the second baseband controller 28. Information is decoded from the received signal in the baseband controller 28. Segments of this information are commonly referred to as navigation chips 40.

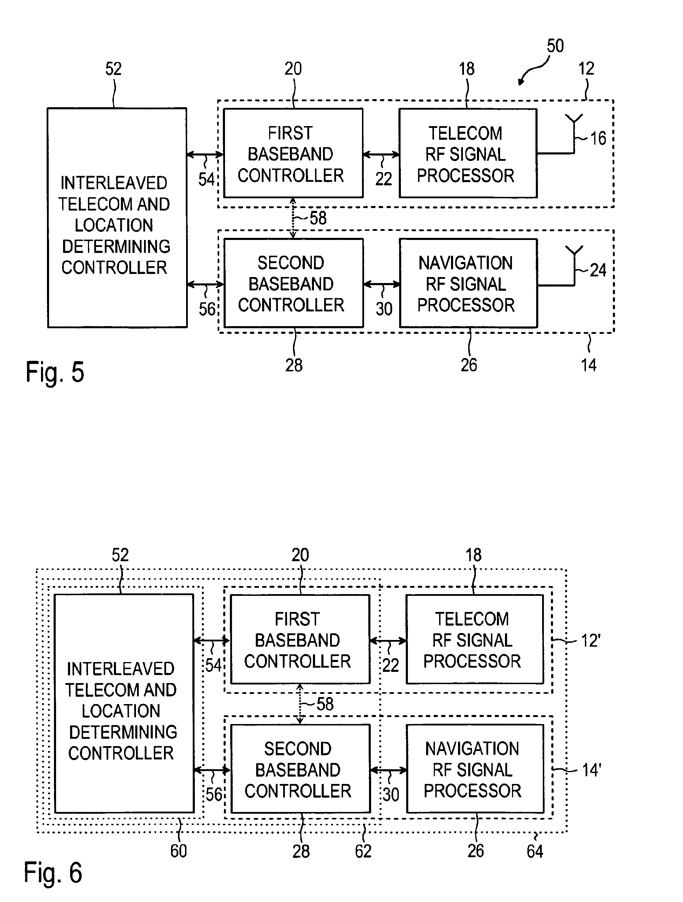

Fig. 5 shows a mobile device 50 according to an embodiment of the invention. The mobile device 50 comprises the components of the mobile device 10 as shown in Fig. 1, and further comprises an interleaved telecommunication and location determining controller 52 that controls the telecommunication section 12 and the location determining section 14 by using an interface 54 to the first baseband controller 20 and an interface 56 to the second baseband controller 28.

In mobile telecommunication networks, which are based on Time Division Multiple Access (TDMA), information is transported in time slots, wherein a single mobile device uses typically a few time slots in its communication with the mobile telecommunication network. The telecommunication RF signal transmitted in a time slot is referred to as burst during which the telecommunication transmitter 32 is active. The telecommunication RF signal received in a time slot is also referred to as a burst during which the telecommunication receiver 34 is active. The time in which the telecommunication transmitter 32 or the telecommunication receiver 34 is inactive is referred to as temporal gap. There is a certain rate of at least partly concurrent telecommunication RF signal bursts while the navigation RF signal needs to be decoded.

As this invention is applicable to various kinds of mobile telecommunication networks, also those which are not based on TDMA, a burst in the sense of this document refers to a telecommunication RF signal while it is transmitted or received, whereas a temporal gap refers to an inactive telecommunication transmitter 32 or to an inactive telecommunication receiver 34. Even in mobile telecommunication networks based on Code Division Multiple Access (CDMA), like in 3G networks, temporal gaps can be present, due to its Compressed Mode. In any case, the interleaved telecommunication and location determining controller 52 may enforce temporal gaps by temporarily disabling the telecommunication transmitter 32 and/or the telecommunication receiver 34.

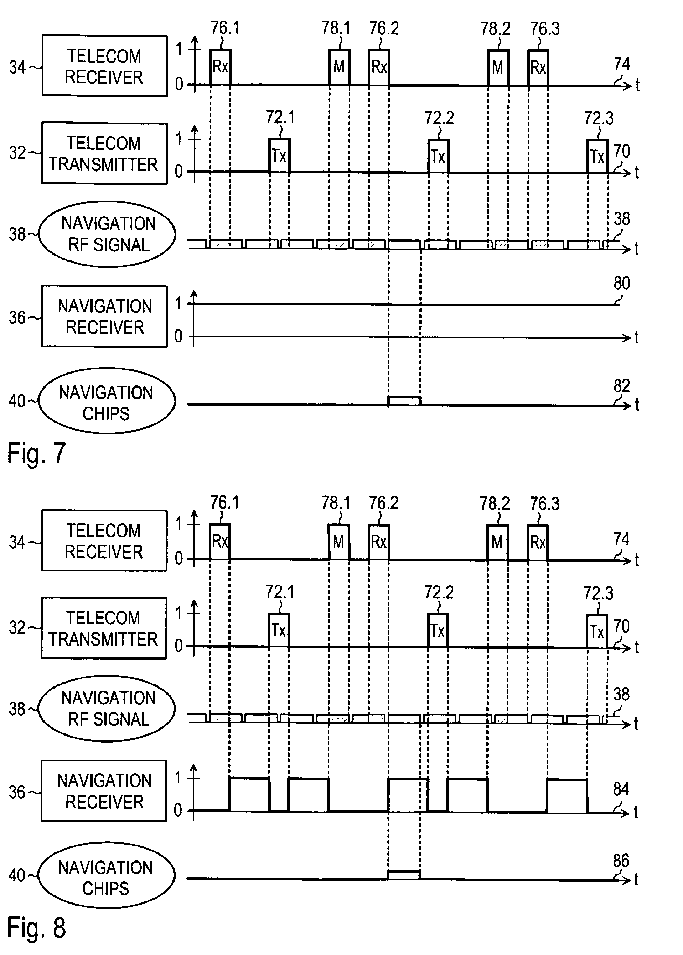

Fig. 7 shows the activity of the telecommunication receiver 34, the telecommunication transmitter 32, and the navigation receiver 36 of a conventional mobile device 10. The mobile device 10 is operated in a GSM network and uses GPS to determine the location. The scenario of Fig. 7 is neither restricted to a GSM network nor to GPS, it is also applicable to other mobile telecommunication networks and other satellite navigation systems. The mobile device 10 has either an active voice call, or an active fax or data session, or performs signaling, and there is a location determination request at the same time. The "0" status in the diagram shows an inactive component, whereas the "1" status refers to an active component. The telecommunication receiver 34 receives a telecommunication RF signal 74 from the mobile telecommunication network. The bursts 76.1, 76.2, and 76.3 (referred to as 76.x) comprise the received message, which is either traffic payload (voice, fax, data) or a signaling message. The bursts 78.1 and 78.2 (referred to as 78.x) are due to measurement purposes to monitor neighbor cells of the mobile telecommunication network for a potential handover. The telecommunication transmitter 32 transmits a telecommunication RF signal 70 to the mobile telecommunication network. The bursts 72.1 and 72.2 (referred to as 72.x) comprise the transmitted message, which is either traffic payload (voice, fax, data) or a signaling message. Uncorrelated to the telecommunication RF signals, the navigation receiver 36 receives a navigation RF signal 38 from the satellite navigation system.

Interference effects might occur between the telecommunication RF signal and the navigation RF signal, when they overlap at least partly. The navigation RF signal 38 is rather weak, compared to the telecommunication RF signal. Due to the small distance between the antenna systems 16 and 24, the navigation RF signal 38 may be distorted while the telecommunication transmitter 32 is active. Minor interference effects may also occur while the telecommunication receiver 34 is active. Depending on the strength of the navigation RF signal 38, navigation chips 40 can only be successfully decoded from the navigation RF signal 38 while both the telecommunication transmitter 32 and the telecommunication receiver 34 are inactive or - if the navigation RF signal is stronger - at least while the telecommunication transmitter 32 remains inactive. In Fig. 7, the navigation receiver 36 is active all the time while trying to determine the location, as shown in characteristic 80. The efficiency of this navigation receiver 36 is rather low during an active telecommunication section 12: As shown in characteristic 82, only one navigation chip 40 can be decoded.

In some embodiments of the invention, the objective is to activate the navigation receiver 36 only during a time interval during which the navigation RF signal 38 can be received while the telecommunication transmitter 32 and the telecommunication receiver 34 are inactive. Fig. 8 shows the same scenario as in Fig. 7, but handled by a mobile device 50 as shown in Fig. 5, which is operated in a GSM network and uses GPS to determine the location. In other embodiments, different mobile telecommunication networks and different satellite navigation systems are used. The mobile device 50 has either an active voice call, an active fax or data session, or performs signaling, and there is a location determination request at the same time.

The interleaved telecommunication and location determining controller 52 knows about the timing of an active or inactive telecommunication transmitter 32 and telecommunication receiver 34. The controller 52 decides which portion of the navigation RF signal 38 is to be processed and which is not. In conjunction with the first baseband controller 20, the controller 52 informs the second baseband controller 28 whether to process the navigation RF signal 38 or not. This approach saves time and power for avoided repeated signal analysis, as the navigation receiver 36 will be inactive while a potentially degraded navigation RF signal 38 is received, as shown in characteristic 84. Again, only one navigation chip 40 can be decoded according to characteristic 86, but less power is consumed in the process.

In another embodiment, the interferences during an active telecommunication receiver 34 are small enough to decode navigation chips 40 during the bursts 76.x and 78.x. In some embodiments, the navigation RF signal 38 above a certain signal strength is also decoded during the periods of activity of the telecommunication receiver 34. The navigation receiver 36 may then be deactivated during the periods of activity of the telecommunication receiver 34 if the navigation chip decoding drops below a certain success rate.

According to another embodiment of the invention, the interleaved telecommunication and location determining controller 52 temporarily disables the telecommunication transmitter or the telecommunication receiver, in case there are not enough temporal gaps available for an evaluable determination of the location.

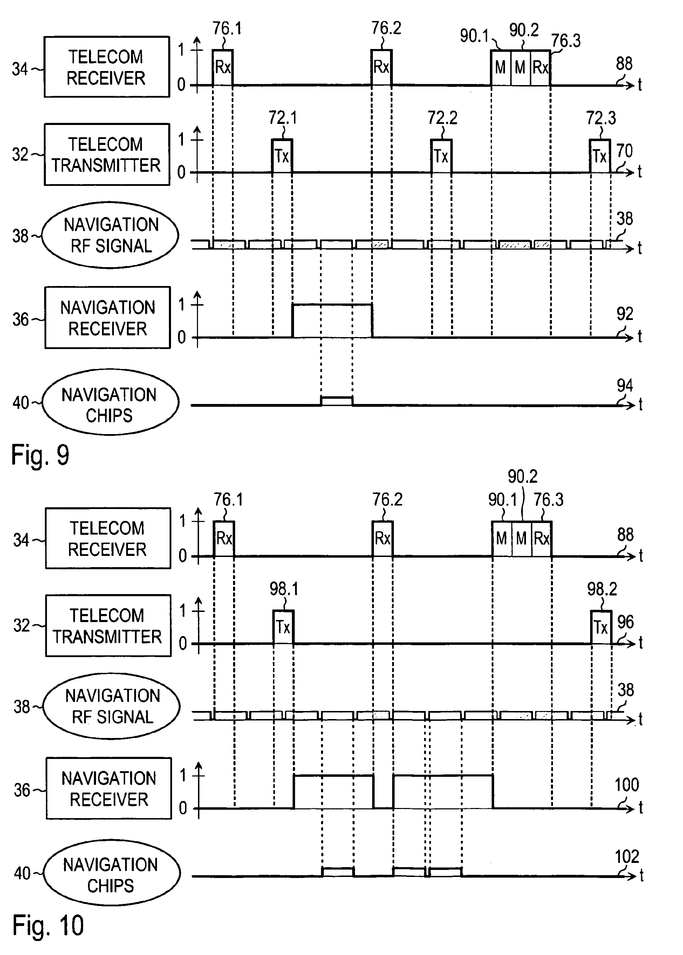

In another embodiment as shown in Fig. 9, the interleaved telecommunication and location determining controller 52 knows the timing of the periods of activity of the telecommunication transmitter 32 and the telecommunication receiver 34. Thus the interleaved telecommunication and location determining controller 52 is capable of estimating suitable temporal gaps in advance. The interleaved telecommunication and location determining controller 52 prevents the second baseband controller 28 from processing portions of the navigation RF signal 38 if there is not enough time to find the start of a navigation chip 40. In such an embodiment, the navigation receiver 36 is only activated if the estimated temporal gap exceeds at least twice the duration of a navigation chip. The characteristic 92 shows that only the temporal gap between the bursts 72.1 and 76.2 is wide enough to certainly decode a navigation chip. Nevertheless, the temporal gap between the bursts 76.2 and 72.2 contains one navigation chip, which could be decoded, if the navigation receiver 34 were active. In this embodiment, the navigation receiver 34 remains inactive during that temporal gap, as the temporal gap does not exceed twice the duration of a navigation chip. The characteristic 92 of Fig. 9 shows that the navigation receiver 36 is only active if there is sufficient time to decode at least one navigation chip 40. This leads still to one navigation chip 40 as shown in characteristic 94, but power consumption has further been reduced.

In another embodiment, the expected timing of the satellite navigation RF signal is determined. This can be done, for example, by initially activating the navigation receiver 34 as described above. As soon as a certain degree of time synchronization with the signals of the satellite navigation system has been established, so that the start time of the next navigation chips can be estimated, the navigation receiver 34 can be activated whenever the temporal gap is sufficient to decode at least one navigation chip 40, even if the temporal gap only slightly exceeds the duration of one navigation chip. In such an embodiment, the temporal gap between the bursts 76.2 and 72.2 of Fig. 9 could be used to activate the navigation receiver 34 and to decode a further navigation chip 40.

In another embodiment, the interleaved telecommunication and location determining controller 52 actively manages the timing when a telecommunication RF signal burst is to be transmitted or when the telecommunication receiver 34 is activated to receive a telecommunication RF signal. This functionality depends on the underlying network and the type of burst since not all bursts can be shifted in time.

Fig. 9 and 10 show in example in which the telecommunication receiver 34 is activated at a different time than in Fig. 8. In particular, the activation time of the telecommunication receiver 34 for receiving a first monitoring burst 78.1 (Fig. 8) has been shifted to a more suitable time such that there is now a wider gap between the bursts 76.1 and 76.2 (Fig. 9). Instead of periodically monitoring one neighbor cell within a certain time interval, as in Fig. 8, two neighbor cells are monitored shortly after each other, as shown in the monitoring bursts 90.1 and 90.2 (referred to as 90.x).

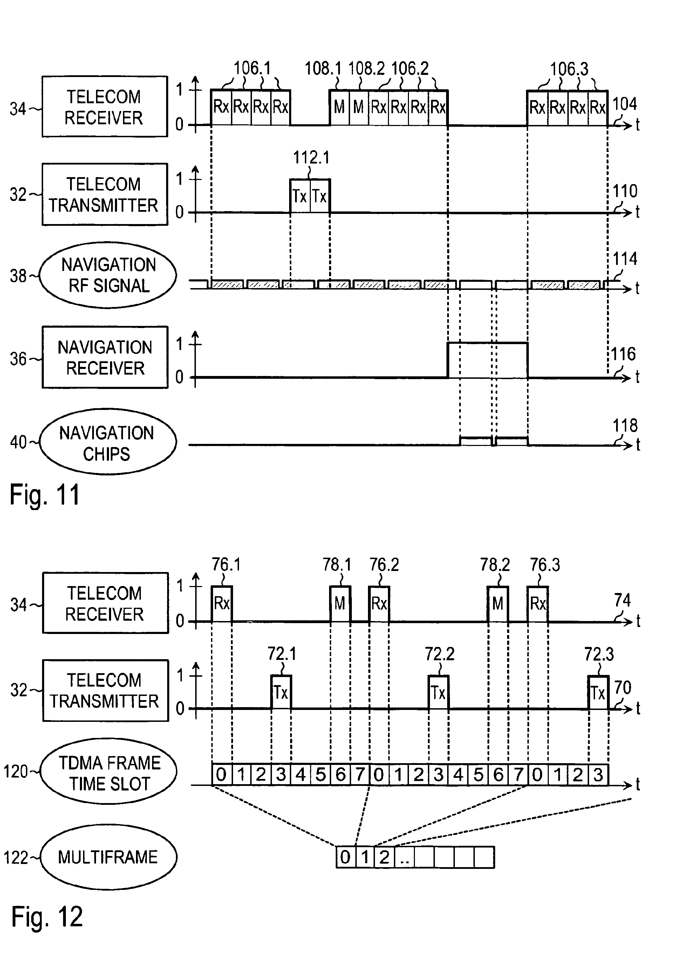

In TDMA based networks, specific time slots are assigned for the communication between the mobile device 50 and the mobile telecommunication network. GSM, GPRS, and EDGE have a TDMA frame cycle of 4,615 ms, with 576,875 µs per time slot. Any not yet occupied time slot within a frame can be used for monitoring neighbor cells. Fig. 12 shows the time slots 120, numbered from zero to seven, which form a TDMA frame, whereas each TDMA frame is an element of a multiframe 122. The telecommunication receiver 34 receives control messages 76.x regularly in time slot 0, whereas the telecommunication transmitter 32 transmits its bursts 72.x in an agreed time slot, here time slot 3. Typically, the messages transmitted and received are spread over various frames of a multiframe. Even if it is not allowed to use a different time slot, the same time slot of another frame can be used.

The telecommunication standards provide timing ranges in which the mobile device 50 has to answer requests. Typically, a message will be answered as soon as possible. In conjunction with the location determining feature, temporal gaps can be created by transmitting a message in another frame, thus leaving a temporal gap in the current frame. Characteristic 96 in Fig. 10 shows the activity of the telecommunication transmitter 32. In case of an active data session or during signaling, the information to be transmitted can also be transmitted in the following frame, leaving a temporal gap in the current frame. In case of GPS, a navigation chip lasts approximately 1 ms. The burst 98.2 leaves a wider temporal gap to the previous burst 98.1. In case of a circuit-switched connection, like an active voice call, this method of shifting transmission to the next frame would lead to a short drop of speech. So this method is mainly used during an active data session and during signaling. Due to the shift of burst 98.2 by one frame, the navigation receiver 36 can be activated for a longer time as shown in characteristic 100, which leads to more decoded navigation chips 40 as shown in characteristic 102.

In case of General Packet Radio Service (GPRS) or Enhanced Data rates for GSM Evolution (EDGE) data transfer, more time slots are used as in voice scenarios. A user, for example, invokes an internet session on his or her smart phone and uses GPS functionality at the same time. In this embodiment, the interleaved telecommunication and location determining controller 52 manages the data transfer rate and thus temporarily reduces the amount of time slots used for data transfer to ensure undistorted navigation RF signal reception at the required point of time. Fig. 11 shows an example having a transmission characteristic 110 with two transmitting time slots and a reception characteristic 104 with four time slots. When reducing the data transfer rate, the scenario of Fig. 10 is applicable. But even in a high-speed data transfer scenario as shown in Fig. 11, temporal gaps can be created by optimizing the monitoring bursts 108.1 and 108.2 (referred to as 108.x), and by leaving transmission gaps when transmitting data. The characteristic 110 shows a transmission burst 112.1, whereas in the next frame no data is transmitted so that the navigation receiver 34 can be activated in this temporal gap, as shown in characteristic 116 and the decoded navigation chips in characteristic 118.

The invention is not restricted to Global System for Mobile Communication (GSM) networks and the Global Positioning System (GPS). The invention is applicable to other mobile telecommunication networks and satellite navigation systems, which cause detrimental signal interference to each other. The invention can also be used in mobile telecommunication networks which are not based on Time Division Multiplex Access (TDMA). In case of a Third Generation (3G) network, there is no time multiplex in the telecommunication RF signal. Nevertheless, the interleaved telecommunication and location determining controller 52 can temporarily disable the telecommunication transmitter or it can operate its first baseband controller 20 in Compressed Mode, which creates temporal gaps.

Each aforementioned embodiment describes a single measure to improve the processing of the navigation RF signal 38. In further embodiments, the interleaved telecommunication and location determining controller 52 comprises a logic which analyzes the current speed and reliability of determining the location. Depending on the configured speed and reliability, the controller 52 aggregates the individual measures of the aforementioned embodiments step by step until the configured target quality is reached.

According to an embodiment of this invention, the described method of utilizing temporal gaps in telecommunication RF signals for an undistorted processing of navigation RF signals is implemented in the interleaved telecommunication and location determining controller 52. Fig. 6 shows various alternative embodiments by dashed lines: In one embodiment the interleaved telecommunication and location determining controller 52 may be realized as an integrated circuit 60. In another embodiment, an integrated circuit 62 combines the interleaved telecommunication and location determining controller 52 with the baseband controllers 20 and 28. In another embodiment, a single chip integrated circuit 64 contains the controllers 52, 20 and 28, and further the telecommunication RF signal processor 18 and the navigation RF signal processor 26. This single chip solution thus integrates a telecommunication section 12' and a location determining section 14', which correspond to the sections 12 and 14 of Fig. 5, but without the antenna systems 16 and 24.

In various embodiments, which can be combined with any of the embodiments described above, a direct hardware-based interface 58 between the two baseband controllers 20 and 28 is provided to exchange time critical information for enabling and disabling navigation RF signal processing.

The particulars contained in the above description of sample embodiments should not be construed as limitations of the scope of the invention, but rather as exemplifications of some embodiments thereof. Many variations are possible and are immediately apparent to the person skilled in the arts. In particular, this concerns variations that comprise a combination of features of the individual embodiments disclosed in the present specification. Accordingly, the scope of the invention should be determined not by the embodiments illustrated, but by the appended claims.

## Claims

1. A method for processing radio frequency (RF) signals, wherein
a telecommunication RF signal having temporal gaps is transmitted to and/or received from a mobile telecommunication network, and wherein
navigation RF signals (38) are received from a satellite navigation system, the method comprising:
determining location information from a portion of the navigation RF signals (38) that is mainly or exclusively received during the temporal gaps of the telecommunication RF signal,
**characterized in that**
the mobile telecommunication network is a Global System for Mobile Communication (GSM) network, and **in that**
the duration of the temporal gaps of the telecommunication RF signal is actively managed to exceed a minimum time interval required to process the navigation RF signal (38).

2. The method of claim 1, wherein
the telecommunication RF signal having temporal gaps is transmitted to the mobile telecommunication network, and wherein
the portion of the navigation RF signals (38) is mainly or exclusively received during the temporal gaps of the transmitted telecommunication RF signal.

3. The method of claim 1, wherein
the telecommunication RF signal having temporal gaps is transmitted to the mobile telecommunication network, and
a further telecommunication RF signal having temporal gaps is received from the mobile telecommunication network, and wherein
the portion of the navigation RF signals (38) is mainly or exclusively received during the overlap of the temporal gaps of the transmitted telecommunication RF signal and the temporal gaps of the received telecommunication RF signal.

4. The method of any one of claims 1 - 3, wherein
the location information is further determined from a further portion of the navigation RF signals (38) that is mainly or exclusively received while at least one of a telecommunication transmitter (32) and a telecommunication receiver (34) is temporarily disabled.

5. The method of any one of claims 1 - 4, wherein
the transmission of the telecommunication RF signal is scheduled so that the duration of the temporal gaps exceeds a minimum time interval required to process the navigation RF signal (38).

6. The method of any one of claims 1 - 5, wherein
the transfer rate of mobile data transported over the telecommunication RF signal is reduced to increase at least one of the number of the temporal gaps and the duration of the temporal gaps.

7. The method of any one of claims 1 - 6, wherein
the location information is only determined if the duration of the next temporal gap exceeds a minimum time interval required to process the navigation RF signal (38).

8. The method of any one of claims 1 - 7, wherein
the satellite navigation system is the Global Positioning System (GPS).

9. The method of any one of claims 1 - 8, wherein
the GSM network supports General Packet Radio Service (GPRS) or Enhanced Data rates for GSM Evolution (EDGE), and wherein
the number of time slots used for mobile data transported over the telecommunication RF signal is reduced to increase at least one of the number of the temporal gaps and the duration of the temporal gaps.

10. The method of any one of claims 1 - 9, wherein actively managing the duration of the temporal gaps of the telecommunication RF signal includes deferring transmission of a message from a current frame to another frame, thus leaving a temporal gap in the current frame.

11. A method for processing radio frequency (RF) signals, wherein
a telecommunication RF signal having temporal gaps is transmitted to and/or received from a mobile telecommunication network, and wherein
navigation RF signals (38) are received from a satellite navigation system, the method comprising:
determining location information from a portion of the navigation RF signals (38) that is mainly or exclusively received during the temporal gaps of the telecommunication RF signal,
**characterized in that**
the expected duration of the next temporal gap is estimated, and **in that**
the location information is only determined if the estimated duration of the next temporal gap exceeds a minimum time interval required to process the navigation RF signal (38).

12. An integrated circuit, comprising:
a telecommunication section (12') configured for transmitting and receiving a telecommunication RF signal,
a location determining section (14') configured for receiving navigation RF signals (38), and
a controller section (52) configured for controlling the telecommunication section (12') and the location determining section (14'),
wherein the integrated circuit is configured for performing the method of any one of claims 1 - 11.

13. The integrated circuit of claim 12, wherein:
the telecommunication section (12') comprises a first baseband controller (20), and
the location determining section (14') comprises a second baseband controller (28), and wherein
the first baseband controller (20) and the second baseband controller (28) are directly connected to each other for faster handshaking between the telecommunication section (12') and the location determining section (14').

14. A mobile phone or tracking device, comprising:
the integrated circuit of any one of claims 12 or 13.

15. A machine-readable medium that comprises a plurality of program instructions, wherein the program instructions are adapted for causing a processor to perform the method of any one of claims 1 - 11.

## Patentansprüche

1. Verfahren zum Verarbeiten von Funkfrequenz-(RF)-Signalen, bei dem
ein Telekommunikations-RF-Signal mit zeitlichen Lücken an ein Mobiltelekommunikationsnetz gesendet und/oder von diesem empfangen wird, und bei dem
Navigations-RF-Signale (38) von einem Satellitennavigationssystem empfangen werden,
das Verfahren aufweisend:
Bestimmen von Ortsinformationen aus einem Teil der Navigations-RF-Signale (38), der überwiegend oder ausschließlich während der zeitlichen Lücken des Telekommunikations-RF-Signals empfangen wird,
**dadurch gekennzeichnet, dass**
das Mobiltelekommunikationsnetz ein Netz gemäß dem *Global System for Mobile Communication* (GSM; Globales System für Mobilkommunikation) ist, und **dadurch**, dass
die Dauer der zeitlichen Lücken in dem Telekommunikations-RF-Signal derart aktiv verwaltet wird, dass sie einen Mindestzeitabschnitt übersteigt, der zum Verarbeiten des Navigations-RF-Signals (38) erforderlich ist.

2. Verfahren nach Anspruch 1, bei dem
das Telekommunikations-RF-Signal mit zeitlichen Lücken an das Mobiltelekommunikationsnetz gesendet wird, und bei dem
der Teil der Navigations-RF-Signale (38) überwiegend oder ausschließlich während der zeitlichen Lücken des gesendeten Telekommunikations-RF-Signals empfangen wird.

3. Verfahren nach Anspruch 1, bei dem
das Telekommunikations-RF-Signal mit zeitlichen Lücken an das Mobiltelekommunikationsnetz gesendet wird, und
ein weiteres Telekommunikations-RF-Signal mit zeitlichen Lücken von dem Mobiltelekommunikationsnetz empfangen wird, und bei dem
der Teil der Navigations-RF-Signale (38) überwiegend oder ausschließlich empfangen wird, während sich die zeitlichen Lücken des gesendeten Telekommunikations-RF-Signals und die zeitlichen Lücken des empfangenen Telekommunikations-RF-Signals überlappen.

4. Verfahren nach einem der Ansprüche 1 - 3, bei dem
die Ortsinformationen ferner aus einem weiteren Teil der Navigations-RF-Signale (38) ermittelt werden, der überwiegend oder ausschließlich empfangen wird, während zumindest ein Telekommunikatonssender (32) und/oder ein Telekommunikationsempfänger (34) vorübergehend deaktiviert ist/sind.

5. Verfahren nach einem der Ansprüche 1 - 4, bei dem
das Senden des Telekommunikations-RF-Signals zeitlich so geplant wird, dass die Dauer der zeitlichen Lücken einen Mindestzeitabschnitt übersteigt, der zum Verarbeiten des Navigations-RF-Signals (38) erforderlich ist.

6. Verfahren nach einem der Ansprüche 1 - 5, bei dem
die Übertragungsrate von Mobildaten, die über das Telekommunikations-RF-Signal übertragen werden, verringert wird, um die Anzahl der zeitlichen Lücken und/oder die Dauer der zeitlichen Lücken zu erhöhen.

7. Verfahren nach einem der Ansprüche 1 - 6, bei dem
die Ortsinformationen nur bestimmt werden, wenn die Dauer der nächsten zeitlichen Lücke einen Mindestzeitabschnitt übersteigt, der zum Verarbeiten des Navigations-RF-Signals (38) erforderlich ist.

8. Verfahren nach einem der Ansprüche 1 - 7, bei dem
das Satellitennavigationssystem das *Global Positioning System* (GPS; Globales Ortsbestimmungssystem) ist.

9. Verfahren nach einem der Ansprüche 1-8, bei dem
das GSM-Netz *General Packet Radio Service* (GPRS; Allgemeiner paketorientierter Funkdienst) oder *Enhanced Data Rates for GSM Evolution* (EDGE; Erhöhte Datenübertragungsraten zur Weiterentwicklung von GSM) unterstützt, und bei dem
die Anzahl von Zeitscheiben, die für über das Telekommunikations-RF-Signal transportierte Mobildaten verwendet werden, verringert wird, um die Anzahl der zeitlichen Lücken und/oder die Dauer der zeitlichen Lücken zu erhöhen.

10. Verfahren nach einem der Ansprüche 1-9, bei dem das aktive Verwalten der Dauer der zeitlichen Lücken des Telekommunikations-RF-Signals umfasst, das Senden einer Nachricht von einem gegenwärtigen Rahmen auf einen anderen Rahmen zu verschieben und somit eine zeitliche Lücke in dem gegenwärtigen Rahmen zu lassen.

11. Verfahren zum Verarbeiten von Funkfrequenz-(RF)-Signalen, bei dem
ein Telekommunikations-RF-Signal mit zeitlichen Lücken an ein Mobiltelekommunikationsnetz gesendet und/oder von diesem empfangen wird, und bei dem
Navigations-RF-Signale (38) von einem Satellitennavigationssystem empfangen werden,
das Verfahren aufweisend:
Bestimmen von Ortsinformationen von einem Teil der Navigations-RF-Signale (38), der überwiegend oder ausschließlich während der zeitlichen Lücken des Telekommunikations-RF-Signals empfangen wird,
**dadurch gekennzeichnet, dass**
die erwartete Dauer der nächsten zeitlichen Lücke geschätzt wird, und **dadurch**, dass
die Ortsinformationen nur bestimmt werden, wenn die geschätzte Dauer der nächsten zeitlichen Lücke einen Mindestzeitabschnitt übersteigt, der zum Verarbeiten des Navigations-RF-Signals (38) erforderlich ist.

12. Integrierte Schaltung, mit:
einem Telekommunikationsabschnitt (12'), der zum Senden und Empfangen eines Telekommunikations-RF-Signals eingerichtet ist,
einem Ortsbestimmungsabschnitt (14'), der zum Empfangen von Navigations-RF-Signalen (38) eingerichtet ist, und
einem Steuerungsabschnitt (52), der zum Steuern des Telekommunikationsabschnitts (12') und des Ortsbestimmungsabschnitts (14') eingerichtet ist,
wobei die integrierte Schaltung zum Ausführen des Verfahrens nach einem der Ansprüche 1 - 11 eingerichtet ist.

13. Integrierte Schaltung nach Anspruch 12, bei der:
der Telekommunikationsabschnitt (12') eine erste Basisband-Steuereinrichtung (20) aufweist, und
der Ortsbestimmungsabschnitt (14') eine zweite Basisband-Steuereinrichtung (28) aufweist, und bei der
die erste Basisband-Steuereinrichtung (20) und die zweite Basisband-Steuereinrichtung (28) zur Beschleunigung des Quittungsbetriebs (*Handshake-*Betrieb) zwischen dem Telekommunikationsabschnitt (12') und dem Ortsbestimmungsabschnitt (14') direkt miteinander verbunden sind.

14. Mobiltelefon oder Ortsbestimmungsvorrichtung, mit:
der integrierten Schaltung nach einem der Ansprüche 12 oder 13.

15. Maschinenlesbares Medium mit einer Mehrzahl von Programmbefehlen, wobei die Programmbefehle dazu eingerichtet sind, einen Prozessor zum Ausführen des Verfahrens nach einem der Ansprüche 1 - 11 zu veranlassen.

## Revendications

1. Procédé de traitement de signaux radiofréquence (RF), dans lequel
un signal RF de télécommunication ayant des espaces temporels est transmis vers un réseau de télécommunication mobile et/ou reçu à partir de celui-ci, et dans lequel
des signaux RF de navigation (38) sont reçus à partir d'un système de navigation par satellite,
le procédé consistant à :
déterminer des informations de localisation à partir d'une partie des signaux RF de navigation (38) qui est principalement ou exclusivement reçue pendant les espaces temporels du signal RF de télécommunication,
**caractérisé en ce que**
le réseau de télécommunication mobile est un réseau GSM (Global System for Mobile Communication), et **en ce que**
la durée des espaces temporels du signal RF de télécommunication est gérée activement pour dépasser un intervalle de temps minimum requis pour traiter le signal RF de navigation (38).

2. Procédé selon la revendication 1, dans lequel
le signal RF de télécommunication ayant des espaces temporels est transmis au réseau de télécommunication mobile, et dans lequel
la partie des signaux RF de navigation (38) est principalement ou exclusivement reçue pendant les espaces temporels du signal RF de télécommunication transmis.

3. Procédé selon la revendication 1, dans lequel
le signal RF de télécommunication ayant des espaces temporels est transmis au réseau de télécommunication mobile, et
un autre signal RF de télécommunication ayant des espaces temporels est reçu du réseau de télécommunication mobile, et dans lequel
la partie des signaux RF de navigation (38) est principalement ou exclusivement reçue pendant le chevauchement des espaces temporels du signal RF de télécommunication transmis et des espaces temporels du signal RF de télécommunication reçu.

4. Procédé selon l'une quelconque des revendications 1 à 3, dans lequel
les informations de localisation sont en outre déterminées à partir d'une autre partie des signaux RF de navigation (38) qui est principalement ou exclusivement reçue alors qu'au moins un d'un émetteur de télécommunication (32) et d'un récepteur de télécommunication (34) est provisoirement désactivé.

5. Procédé selon l'une quelconque des revendications 1 à 4, dans lequel
la transmission du signal RF de télécommunication est programmée de sorte que la durée des espaces temporels dépasse un intervalle de temps minimum requis pour traiter le signal RF de navigation (38).

6. Procédé selon l'une quelconque des revendications 1 à 5, dans lequel
la vitesse de transfert de données mobiles transportées sur le signal RF de télécommunication est réduite pour augmenter au moins un du nombre des espaces temporels et de la durée des espaces temporels.

7. Procédé selon l'une quelconque des revendications 1 à 6, dans lequel
les informations de localisation sont uniquement déterminées si la durée de l'espace temporel suivant dépasse un intervalle de temps minimum requis pour traiter le signal RF de navigation (38).

8. Procédé selon l'une quelconque des revendications 1 à 7, dans lequel
le système de navigation par satellite est le système mondial de localisation (GPS).

9. Procédé selon l'une quelconque des revendications 1 à 8, dans lequel
le réseau GSM supporte le service général de radiocommunication par paquets (GPRS - General Packet Radio Service) ou le GSM à débit amélioré (EDGE - Enhanced Data rates for GSM Evolution), et dans lequel
le nombre de tranches de temps utilisées pour les données mobiles transportées sur le signal RF de télécommunication est réduit pour augmenter au moins un du nombre des espaces temporels et de la durée des espaces temporels.

10. Procédé selon l'une quelconque des revendications 1 à 9, dans lequel la gestion active de la durée des espaces temporels du signal RF de télécommunication consiste à différer la transmission d'un message d'une trame courante à une autre trame, laissant ainsi un espace temporel dans la trame courante.

11. Procédé de traitement de signaux radiofréquence (RF), dans lequel
un signal RF de télécommunication ayant des espaces temporels est transmis à un réseau de télécommunication mobile et/ou reçu à partir de celui-ci, et dans lequel
des signaux RF de navigation (38) sont reçus à partir d'un système de navigation par satellite,
le procédé consistant à :
déterminer des informations de localisation à partir d'une partie des signaux RF de navigation (38) qui est principalement ou exclusivement reçue pendant les espaces temporels du signal RF de télécommunication,
**caractérisé en ce que**
la durée prévue de l'espace temporel suivant est estimée, et **en ce que**
les informations de localisation sont uniquement déterminées si la durée estimée de l'espace temporel suivant dépasse un intervalle de temps minimum requis pour traiter le signal RF de navigation (38).

12. Circuit intégré, comprenant :
une section de télécommunication (12') configurée pour transmettre et recevoir un signal RF de télécommunication,
une section de détermination de localisation (14') configurée pour recevoir des signaux RF de navigation (38), et
une section de contrôle (52) configurée pour contrôler la section de télécommunication (12') et la section de détermination de localisation (14'),
dans lequel le circuit intégré est configuré pour effectuer le procédé selon l'une quelconque des revendications 1 à 11.

13. Circuit intégré selon la revendication 12, dans lequel
la section de télécommunication (12') comprend un premier contrôleur en bande de base (20), et
la section de détermination de localisation (14') comprend un second contrôleur en bande de base (28), et dans lequel
le premier contrôleur en bande de base (20) et le second contrôleur en bande de base (28) sont connectés directement l'un à l'autre pour un protocole de transfert plus rapide entre la section de télécommunication (12') et la section de détermination de localisation (14').

14. Téléphone mobile ou dispositif de suivi, comprenant :
le circuit intégré selon l'une quelconque des revendications 12 ou 13.

15. Support lisible par machine qui comprend une pluralité d'instructions de programme, dans lequel les instructions de programme sont adaptées pour commander l'exécution par un processeur du procédé selon l'une quelconque des revendications 1 à 11.
